# EUROPEAN PATENT APPLICATION

(11) **EP 4 009 508 A1**
(43) Date of publication of application: **08.06.2022**
(21) Application number: 21205466.2
(22) Date of filing: 29.10.2021
(51) Int. Cl.: H02M 7/483, H02J 7/00

(54) **BATTERY STORAGE SYSTEM WITH TEMPERATURE MANAGEMENT**

(30) Priority: 04.12.2020 EP 20211860
(71) Applicant: STABL Energy GmbH, 81379 München (DE)
(72) Inventor: SINGER, Arthur, 80687 München (DE); RADOJCIC, Rene, 80993 München (DE)
(74) Representative: Lohr, Jöstingmeier & Partner

(57) **Abstract**

A modular multilevel converter having a plurality of converter modules and a controller, which is configured to individually operate at least one of the converter modules by connecting and disconnecting its battery with a frequency to selectively increase and/or decrease the temperature of its battery. Each battery in the modular multilevel converter may be controlled individually.

## Description

### Field of the invention

The invention relates to battery storage systems based on modular multilevel converters (MMC).

### Description of the related art

The performance and aging of a battery largely depend not only on its number of charge-discharge cycles but on its temperature. Specifically, batteries with a high capacity and high current capability as lithium-ion-batteries develop a significant amount of heat when a high current is drawn. If the battery gets too hot, efficiency and capacity may decrease while its impedance may increase. This is especially important when fast charging batteries with high currents the heat dissipation becomes excessive. This is the reason why many cars also activate their battery cooling system at high power when fast charging. This leads to high losses, battery degradation and too long charging times.

To avoid overheating of batteries, liquid cooling systems may be used. Such a liquid cooling system is disclosed in EP 2 442 390 B1. Here, a circulating liquid in cooling pipes is used to transfer heat between the batteries and a heat exchanger. A cooling liquid entering the heat exchanger has a higher temperature than a cooling liquid leaving the heat exchanger, because it is cooled down in the heat exchanger. Accordingly, the batteries being in a cooling liquid flow behind the heat exchanger get a cooler liquid than the batteries at the end before the liquid enters the heat exchanger. As such, batteries with a cooler liquid have a lower temperature than batteries with a warmer liquid. Generally, a higher temperature of batteries may lead to further heating of the batteries and a lower lifetime.

Similar problems may arise if a battery pack is air-cooled. Normally, an evenly distributed air flow over all batteries can hardly be maintained, and further the temperatures are lower at the air inlet compared to the outlet.

In battery packs which have no liquid cooling, this is even worse. Usually, the outer batteries of the battery pack can dissipate heat to the outside, either by thermal contact to heat conducting walls, or by an air flow. The inner batteries are surrounded by other batteries generating heat and therefore cannot dissipate heat, such that they heat up further. This results in a heat distribution with the highest temperature at the innermost batteries, which again may have a lower lifetime than the outer batteries.

Battery systems are often operated with inverters to generate an AC line voltage and/or to drive motors. Such an inverter is disclosed in US 2012/0243279 A1. More flexibility is obtained by a modular multilevel converter as disclosed in US 9,502,960 B2. A plurality of modules, each comprising a battery and multiple switches are connected in a series circuit. DE 10 2012 220 388 A1 discloses an arrangement of multiple inverter cells, each having a separate bypass switch. DE 10 2012 220 388 A1 discloses an inverter which is controlled based on the temperature of individual inverter cells.

### Summary of the invention

The problem to be solved by the invention is to provide a higher lifetime and/or higher efficiency of the batteries in a battery storage system by maintaining an evenly distributed temperature over all batteries. A further problem to be solved is to improve efficiency of liquid or air cooling in a battery storage system. If a physical battery storage system is built, the temperature of the batteries is not only determined by their individual power through put and their individual parameters (mainly inner resistance, chemistry and frequency dependent impedance), but also by their physical placement in relation to each other (if one battery is hot, the neighboring batteries will also have an increased temperature) and in relation to their surroundings (e.g. the battery near to the cooling system output will be cooler than one further away or the batteries on the edges of the battery pack might have a cooler temperature if regarding an electric vehicle on a winter day). The temperature of a battery may thus be partly independent of its corresponding power electronics temperature. Temperature management systems for battery storage are aimed to hold all batteries on the same temperature and great efforts are done to solve above mentioned problems with solely physical means (e.g. design of cooling circuit). This leads to oversized cooling systems which drive up cost and energy consumption of battery systems. With multilevel converters it is possible to individually address particular batteries in order to support the temperature management by changing their electrical loads.

Embodiments as disclosed in DE 10 2012 220 388 A1 and as mentioned above only consider a complete inverter module which includes power switches and a battery, whereas the temperature measurement happens on the power switches. Tests and measurements with such systems have shown that depending on their operating state, the power switches have a higher power loss and generate more heat than the battery, resulting in different temperatures for the power switches and the batteries. The semiconductors of the power switches can operate in a much wider temperature range than batteries can. Therefore, monitoring the battery is much more critical than monitoring the power switches. Further, for optimum performance, the batteries should be kept within a narrow temperature range (e.g., 10°C ― 40°C) whereas the temperature of the power switches must only be monitored to avoid overheating (no minimum temperature, up to 125°C or 150°C possible).

Solutions of the problem are described in the independent claims. The dependent claims relate to further improvements of the invention.

The embodiments allow to individually control the temperature of batteries in a multilevel converter by individually setting the level of internal power losses of the batteries for each module. This further allows for a faster charging of the batteries and for a higher current output of the batteries, since cooler batteries are no longer restricted by the hotter batteries in the battery pack.

By the embodiments shown herein, temperature stress on the individual batteries can be minimized and therefore fast charging can be enabled. By alternating current flow through individual batteries and adjusting their operational frequency higher current loads at less losses become possible.

Within their normal operating temperature range, the internal resistance of batteries decreases with temperature, but may increase again, if the batteries become too hot. Warmer batteries with a lower internal resistance can be operated with a higher current to have the same losses as batteries with a lower temperature. Further, batteries age faster with higher temperatures. Therefore, it is beneficial to keep the temperature within an optimum range. To equalize the temperatures of individual batteries in a battery storage system, either cooling may be adapted to the temperatures of individual batteries or the power dissipation of individual batteries is controlled.

This embodiment relies on the temperature of the batteries themselves. Care may be taken to measure the batteries' temperature without being influenced by the temperature of nearby components, e.g. power electronics from the converter. A thermal insulation between the batteries and converter components may be provided. Such a thermal insulation may include an air gap preventing transfer of a significant amount of heat.

The electronic components of the power circuit (e.g., the switches) normally have a significant shorter time constant than the batteries regarding temperature change. Therefore, a common measurement of an inverter module temperature barely represents the battery temperature. Further, the electronic switches normally have a wider operating temperature range. Whereas a semiconductor can operate at or more than 100°C, a battery would be destroyed at such a temperature. Such, switches, having for example a temperature of 80°C at their heatsink in proximity to a battery having a temperature of 35°C may generate a total temperature reading in a range between 35°C and 80°C.

In an embodiment, the at least one temperature sensor may include a microcontroller configured to evaluate at least one current and at least one voltage of the battery to estimate the temperature of the battery. This microcontroller may be a module controller at a module or a master controller, controlling a plurality of modules or module controllers.

In an embodiment, the at least one temperature sensor may include a thermal sensor which is thermally coupled to the battery such that the thermal resistance between the thermal sensor and the battery is lower than the thermal resistance between the thermal sensor and the switching circuit. This reduces false indications by the temperature of the switching circuit. The thermal resistance between the thermal sensor and the battery may be lower than the thermal resistance between the thermal sensor and the switching circuit for at least one of a factor of 2, 10, 20, 50, or 100.

Further, the battery may be thermally insulated from the switching circuit. This may avoid unwanted heat transfer and unwanted heating of the battery as well as false battery temperature measurements.

The embodiments are based on modular multilevel converters (MMC). Such a MMC can address individual batteries of a battery storage system. It may selectively control the current flow into and out of such individual batteries. Herein the term "battery" is used for electrical energy storage components in general. Such an electrical energy storage component may be a battery, a group of battery cells, a fuel cell or any other component which is able to store and/or to deliver electrical energy.

A modular multilevel converter MMC basically includes a plurality of converter modules. They may be all identical. The converter modules are connected in series which may form a one phase power system. For a three-phase power system, three such series connections are required. Also any other number of series connections may be used.

Each converter module includes at least a battery-the term battery is used herein for a general energy storage device like a battery cell or a plurality of battery cells, a capacitor etc. Each converter module further includes a switching circuit and a module controller. The switching circuit includes at least one switch which may be a semiconductor switch, e.g. a MOSFET, an IGBT or a bipolar transistor. The at least one switching circuit has at least two switching states:
A) in a first state, the battery is connected between at least one module first port and at least one module second port,
B) in a second state, the battery is disconnected from the at least one module first port and/or the at least one module second port and further, the at least one module first port is connected to the at least one module second port.

In the first state, the battery is connected between the module ports, such that it can deliver power or can be charged. The battery may be connected by either polarity. In the second state, the battery is disconnected, and a short circuit is provided between the module ports, such that the module may act like a wire connection. The first state may be maintained for first durations and the second state may be maintained for second durations. First and second durations may be different and may further be determined before entering a state or during a state.

Normally, a switching circuit includes two switches or more, which are controlled by the module controller. The module controllers of a plurality of modules are connected to each other or at least to a master controller. The master controller together with the module controllers form a controller of the MMC. The controller of the MMC configures the switches of the plurality of modules, such that a requested output voltage or output voltage waveform is provided by the MMC. Calculation of first and second durations as well as any further calculations like determination of setpoints or temperatures may be made by the controller. Parts or all of the calculations may be done by any part of the controller e.g. the master controller and/or the module controllers. Further parts or all of the calculations may be done by a remote computer or server like a server in a cloud.

In most applications, a MMC delivers a sinusoidal output voltage and a sinusoidal output current. The currents through a battery are sine-shaped or sections of sine shapes. In some applications, a MMC delivers a direct output voltage and a direct output current (DC). The currents through a battery are sections of the direct current. The MMC may supply power to any load or even be in an idle state. A load may be a motor or a power line system. The load may be a DC load or an AC load which may have one or three or any other number of phases.

Normally, a MMC is configured for an active charge balancing of the batteries in a battery storage system. In a charge balanced system all batteries have approximately the same state of charge (SOC). Damaging of individual batteries having a lower SOC by deep discharge or a higher SOC by overcharging may be prevented.

Normally, a battery storage system includes a plurality of the same type of batteries. Thereby all batteries have approximately the same internal resistance and the same lifetime. In an embodiment, different batteries may be mixed. The employed batteries may differ regarding voltage, chemistry, SOC, SOH, temperature, impedance and/or capacity. In this case a balancing of the batteries regarding SOC and temperature is more complex and only possible in a MMC, which can control its batteries individually.

In an embodiment, the controller is configured to individually operate at least a switching circuit of at least one of the converter modules by connecting and disconnecting the battery of the converter module with first durations of the first state and second durations of the second state based on the temperature of its battery. This allows for control of the temperature of the battery of individual converter modules.

This may allow for equalizing temperatures between individual batteries or to set an individual battery to a predetermined temperature value. Further, the timing of a first converter module with its first battery having a lower temperature value than the temperature value of a second battery of a second converter module may be adapted to increase the thermal dissipation of its first battery. The thermal dissipation of the first battery may even be increased over the thermal dissipation of the second battery. Similarly, the thermal dissipation may be decreased. Connecting a battery may mean here, connecting it with either polarity or a reverse polarity thereof.

In an embodiment, a MMC is configured to charge and/or to discharge individual batteries or groups of batteries based on their temperature. This is normally not in line with charge balancing as described above. Therefore, the batteries may be slightly disbalanced, but the benefit of equalized temperatures and higher power output together with higher lifetime prevails the benefits of charge balancing. Charge balancing can be accomplished on a later point in time, when a higher power output no longer is required.

In another embodiment, the controller is configured to modify frequency and/or duty cycle of switching between the first state and the second state. Herein the term of switching between the states means that either the first state is selected or the second state is selected. As the impedance of batteries is frequency-dependent, batteries with a lower temperature may be operated with a frequency causing higher losses, whereas batteries with a higher temperature may be operated with a frequency causing lower losses. As the batteries with a lower temperature will have higher losses than the batteries with a higher temperature, the temperatures of the cells may approach to a common temperature over time. Further a higher duty cycle normally generates higher losses over time, while a lower duty cycle generates lower losses over time.

In an embodiment, a frequency with low losses may be selected. This may include a change of polarity, e.g., having charging pulses followed by at least one discharge pulse and vice versa.

A battery, but also an electrical energy storage component in general has an internal electrical impedance which varies with current level and frequency of a current delivered by the battery. The internal electrical impedance of a battery directly determines the electrical losses in the battery. If the impedance is a complex value, the real part determines the losses. Therefore, at a given current which has to be delivered by a battery, the frequency may be used to control power dissipation of the battery. Different batteries in different modules of a modular multilevel converter may be switched with frequencies adapted to the required electrical losses in the battery for maintaining a desired temperature.

The average or RMS (Root Mean Square) value of the current through a battery may be selected based on the temperature of the battery. As such, the RMS current through a battery may be increased to increase battery temperature and/or the RMS current through a battery may be decreased to decrease battery temperature. Further, batteries with a lower temperature may be charged and/or discharged with a higher current than batteries with a higher temperature. This may also apply to groups of batteries. The RMS current through one battery (and thus its charging or discharging power) by either changing the duration of the battery being in the current path or by controlling at which system current the battery is switched into the current path and when it is switched out again (e.g., the battery could be in a bypass mode around the peak of the sinusoidal load current in order to decrease its RMS current)

Batteries with a higher temperature may even have lower losses when being operated with a higher current than batteries with a higher temperature. The operating current of batteries with a higher temperature may be increased over the average current of batteries with a lower temperature, such than the batteries get the same temperature after a certain time.

In an embodiment, the MMC is configured to charge and/or to discharge batteries with a lower temperature with a higher current than batteries with a higher temperature.

At least one temperature sensor may be provided to measure and/or estimate the temperature of the batteries in a battery storage system. In an embodiment, there is at least one sensor provided for each battery. There may also be a lower number of sensors than the number of batteries. In such a case, temperature values may be interpolated and/or extrapolated for sensors having no batteries.

A temperature sensor may be a physical sensor like at least one of a semiconductor device, NTC, PTC, PT100, PT100 or a thermocouple. A temperature sensor may also be a computer program which performs steps of calculations based on the measurement of physical parameters of a battery which include at least one of battery voltage, battery current, battery state of charge, battery state of health. The computer program may further use the data of physical temperature sensors. The computer program may further may use a physical model of the batteries geometries, their physical parameters, especially their mass, volume, thermal resistance and thermal inertia together with their arrangement in space and the parameters and geometry of the cooling system to model the temperature developments of the single batteries overtime and dependent on the current and extrapolate between possible temperature sensors.

In an embodiment, the controller is configured to determine the temperature of a battery based on measurements of the battery voltage shortly after a load transition.

In an embodiment, a controller is configured to perform the steps of
- obtaining a first temperature value of each of a plurality of batteries of a first plurality of converter modules,
- calculating an electrical power dissipation setpoint for each of the first plurality of the batteries based on a difference between the first temperature value and predetermined temperature values,
- calculating a frequency and/or duty cycle to operate each of the converter modules to obtain the calculated power dissipation,
- providing control signals to each of said first plurality of converter modules to obtain a predetermined output voltage waveform of the multilevel converter while operating each of the first plurality of converter modules with the calculated frequency and/or duty cycle.

Further, the predetermined temperature values may be the same for each of the first plurality of the batteries. This is temperature balancing of the batteries.

In another embodiment, a controller is configured to perform the steps of
- calculating a frequency to operate each of the modules including the first plurality of the batteries, to obtain a minimum power dissipation,
- providing control signals for each of said modules to obtain a predetermined output voltage waveform of the multilevel converter while operating each of the modules with the calculated frequency.

In addition to the second step, suitable frequencies may be calculated to obtain required heat dissipations.

This method may be repeated as often as required, e.g. continuously or in predetermined intervals.

Basically, a method as described herein may be performed by a controller of a modular multilevel converter, preferably in the sequence given.

Operating a battery, as described above, in a first mode, which is temperature-based, may result in cells with different state of charge (SOC). Therefore, after a certain time and/or a certain amount of transferred charge, the MMC may be operated in a second mode of charge balancing. In this second mode, all batteries are set to the same or at least a similar state of charge (SOC). The switching circuit of at least one of the converter modules may be for third durations in the first state and for fourth durations in the second state based on the state of charge of a plurality of batteries. When all batteries have the same state of charge, they have approximately the same internal resistance and the same lifetime. Whereas a first mode based on temperature is beneficial for high loads, and to avoid large temperature differences between the batteries, or very low battery temperatures, a second mode of charge balancing may be used for low loads or in an idle state.

In an embodiment, the charge balancing may be interrupted for performing a temperature balancing, e.g. when a high power is required either for charging or discharging. In states of a low power requirement, the charge balancing may be resumed.

In an embodiment the switching circuits may be configured to be able to switch also in a third state. In this third state the batteries of neighboring modules are being switched in parallel. Switching the batteries in parallel reduces their RMS current as the current is divided between the batteries and thus lowers their power dissipation or heating. Warmer batteries may be grouped in bigger groups in order to reduce their power dissipation in comparison with single batteries from other modules or groups with less batteries in parallel. In a group of parallel batteries all batteries are charged or discharged with approximately the same current.

To increase the temperature of batteries, a pair of batteries may be connected with reversed polarity. E.g. one module may be switching its battery to a first polarity while a second module is switched to the inverse polarity. Accordingly, the total output voltage of both modules is zero and energy is transferred from one module's battery to the other, causing losses which heat up the batteries of both modules. Further, the polarity of both modules may be reversed such that the charging state of the batteries is kept approximately constant. Reversal may be done periodically or based on the transferred charge.

The embodiments allow to provide a temperature balancing over a plurality of batteries in a battery storage system. Further, the temperature of individual batteries of a battery storage system may be controlled. This may be useful for testing individual batteries or groups of batteries.

In a further embodiment, the controller is configured, not only to balance the temperature of the batteries within a modular multilevel converter, but also to heat the batteries to a temperature, where they have a higher efficiency than before heating. In a further embodiment the batteries are heated to a temperature, where they have their optimum efficiency and/or their lowest series resistance.

### Description of Drawings

In the following the invention will be described by way of example, without limitation of the general inventive concept, on examples of embodiment with reference to the drawings.
- Figure 1: shows a basic block diagram of an embodiment.
- Figure 2: shows a schematic diagram of a cooling system.
- Figure 3: shows a schematic flow diagram of a method of temperature balancing of batteries.
- Figure 4: shows a sequence of states.
- Figure 5: shows a timing diagram of a standard modular multilevel converter.
- Figure 6: shows a voltage of a temperature balancing multilevel converter.
- Figure 7: shows voltages of a multilevel converter with frequency control.
- Figure 8: shows a first switching state.
- Figure 9: shows a second switching state.
- Figure 10: shows a third switching state.
- Figure 11: shows a fourth switching state.
- Figure 12: shows the influence of frequency on the internal resistance.
- Figure 13: shows a battery voltage and current during a cycle.
- Figure 14: shows an indirect temperature measurement.

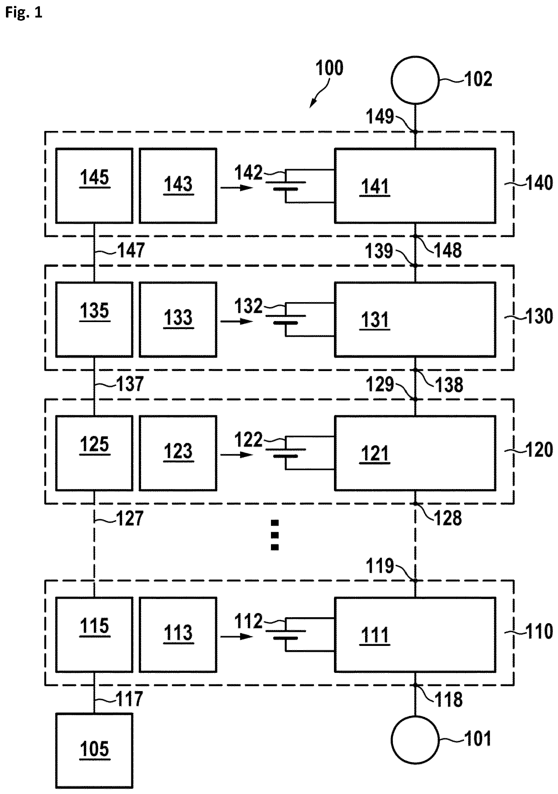

In Figure 1, a basic block diagram of an embodiment is shown. A modular multilevel converter (MMC) includes a plurality of converter modules 110, 120, 130, 140. Generally, at least two modules are required, but the number of modules may be extended as high as suitable for a desired output voltage. The embodiments mentioned herein are basically independent of the number of modules, as long as there are at least two modules in a multilevel converter. The multilevel converter has a first converter port 101 and a second converter port 102. For interconnecting the modules, each converter module has a first module port 118, 128, 138, 148 and a second module port 119, 129, 139, 149. The first module port 118 of a first converter module 110 is connected to the first converter port 101. Further modules are connected with their module first port 128, 138, 148 to a module second port 119, 129, 139 of a preceding module to form a series connection. Further, the module second port 149 of the last module is connected to the second converter port 102. Depending on the required output voltage or a required charging condition, a certain number of modules are switched in series by switches internal to the modules, as will be described later.

Each converter module 110 120, 130, 140 includes at least a battery 112, 122, 132, 142, a switching circuit 111, 121, 131, 141, a temperature sensor 113, 123, 133, 143, and a module controller 115, 125, 135, 145.

Details of the converter modules are described by example of the first converter module 110. The other converter modules 120, 130, 140 are basically the same.

A switching circuit 111 has at least two switching states. In a first switching state, the battery 112 is connected between the module first port 118 and the module second port 119. In a second switching state, the battery 112 is disconnected from either the module first port 118, or the module second port 119, or both. In addition, when the battery is disconnected, a short circuit is provided between the module first port 118 and the module second port 119. The switching circuit 111 is controlled by a module controller 115 which is in communication by means of a communication link 117 with at least a master controller 105. The master controller 105 controls all converter modules of a modular multilevel controller.

Further, each converter module 110 120, 130, 140 includes a temperature sensor 113, 123, 133, 143 which senses a temperature value of the battery. As mentioned above, the battery may include at least one battery cell. It may also include multiple battery cells or a large number of battery cells. In these cases, the temperature sensor may include a plurality of temperature sensors which indicate multiple temperature values of the multiple battery cells. The temperature sensor 113 transmits the temperature value to the module controller 115. In the case of multiple temperature sensors, either multiple temperatures, and/or a minimum temperature and/or a maximum temperature and/or an average temperature may be transmitted. The temperature sensor may also be method or software algorithm, e.g. running on a microcontroller, which calculates a temperature based on current and/or voltage measurements.

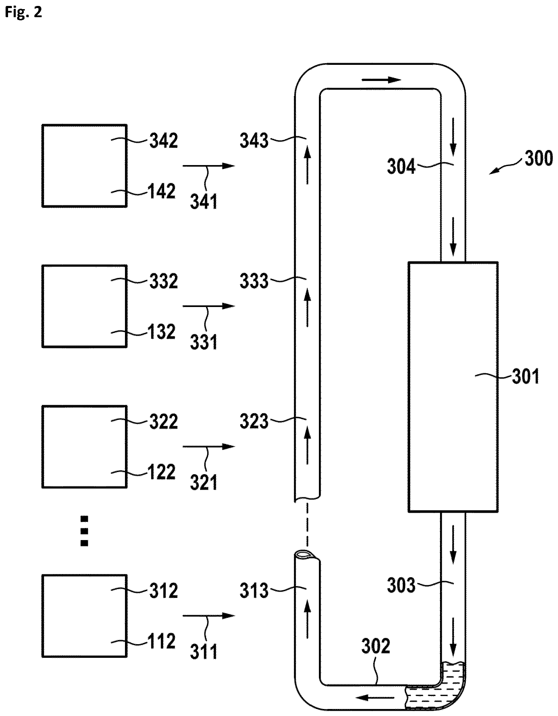

In Figure 2, a schematic diagram of a cooling system 300 of a modular multilevel converter 100 is shown. A plurality of batteries 112, 122, 132, 142 is cooled by a cooling liquid 303 circulating in a liquid duct 302 in a direction 304 as shown by arrows 304. The liquid is cooled by a heat exchanger 301 such that the temperature of liquid leaving the heat exchanger is lower than the temperature of a liquid entering the heat exchanger. Each of the batteries has electrical losses which heat up the battery to a battery-specific temperature 312, 322, 332, 342. Normally, this temperature is higher than the temperature of the cooling liquid 303 at a location of the battery. This leads to a transfer of heat as indicated by arrows 311, 321, 331, 341, thus increasing the temperature of the cooling liquid 303 to temperatures 313, 323, 333, 343. As each battery adds some heat to the cooling liquid, the temperature of the cooling liquid increases when passing the batteries. Therefore, the cooling liquid temperature 313 at battery 112 is the lowest and cooling liquid temperature 343 at battery 142 is the highest one. Generally, the heat transferred per time unit is a function of the temperature of the battery minus the temperature of the cooling liquid at the battery, the difference further divided by the thermal resistance between the battery and the cooling liquid. Here it is assumed that the thermal resistance between a battery and the cooling liquid is approximately the same for all batteries. Under this assumption, the cooling efficiency for battery 112 with the lowest cooling liquid temperature is better than cooling efficiency at battery 142 with highest cooling liquid temperature 343. To obtain approximately equal temperatures for the batteries, the first battery 112 may have the highest power dissipation because of the highest cooling efficiency, whereas the last battery 142 will have the lowest power dissipation due to the lowest cooling efficiency. The power dissipations of the batteries in-between may be adapted according to decreasing cooling efficiency from the first to the last battery. It should be noted that in an ideal system, where the thermal resistance between the batteries and the cooling liquid is zero, the batteries will have increasing temperatures due to the increasing temperature of the cooling liquid. In a real system with a thermal resistance between the batteries and the cooling liquid, the batteries may all have the same temperature, and even temperatures in a reverse order. For obtaining maximum output and maximum lifetime of the batteries, the temperatures of all batteries should be kept at least approximately the same.

The considerations made above apply to a configuration, where the batteries are cooled, e.g. the temperature of the cooling liquid is below the temperature of the batteries. Basically, the conditions are the same if the batteries are heated and the cooling liquid has a higher temperature than the batteries, with the difference that heat is now transferred from the warmer cooling liquid to the batteries. There may also be configurations, where the temperatures of the batteries and the cooling liquid are approximately the same, and some batteries are cooled and others are heated.

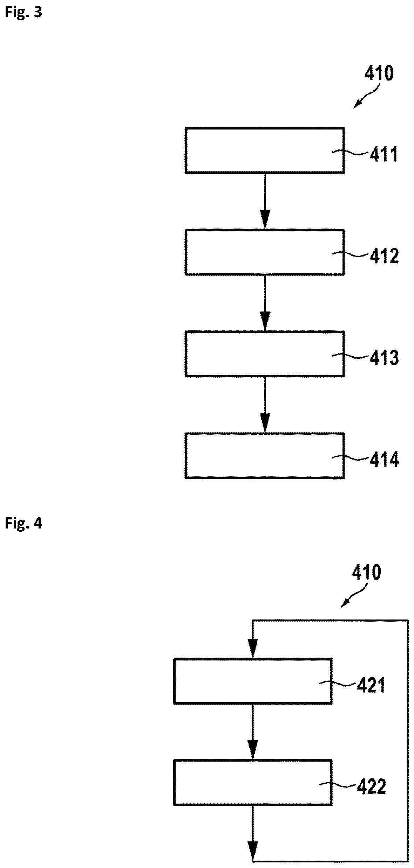

In Figure 3, a schematic flow diagram of a method of temperature balancing of batteries is shown.

In a first step, a first temperature value is obtained for each of a plurality of batteries. This temperature may either be measured directly, e.g. by a temperature sensor, indirectly, e.g. by voltage and/or current measurements, or be calculated, or any combination thereof.

The next step 412 is calculating an electrical power dissipation set point for each of the first plurality of batteries. Such a set point may be based on a difference between the first temperature value and a predetermined temperature value or a set point value for a temperature. By knowing the difference in temperatures, it can be estimated what power dissipation or what level of electrical losses by a battery is required to adapt the first temperature to the target temperature in a given period of time.

The next step 413 includes calculating a frequency and/or a duty cycle of switching between the first state and the second state to obtain the calculated power dissipation and/or power losses in the battery. As further mentioned herein, the losses of a battery may depend on a signal frequency by which the battery is charged and/or discharged. Accordingly, an appropriate frequency may be chosen. Further, a duty cycle for switching between the states may be selected. Normally, the cycles of the duty cycle are synchronous with the output signal, and therefore switching on a battery at high current levels gives a higher power dissipation of the battery than switching it on at lower current levels.

The fourth step 414 includes providing a control signals to each of the said plurality of converter modules and/or the switching circuits therein to obtain the previously calculated wave form.

This method may be repeated as often as required, e.g. continuously or in predetermined intervals.

In Figure 4, a sequence of states is shown.

In a first state 421, a battery is connected between at least one module first port and at least one module second port.

The second state 422 which normally follows the first state 421, includes disconnecting the battery from at least one of the first and/or second ports and further make a short circuit between the at least one first port and the at least one second port, such that current can flow through the module with a comparatively low voltage drop. After this state, the procedure may start again with the first state 421. In an embodiment, this procedure may be interrupted between any two states for further states, e.g. for at least one charge balancing state.

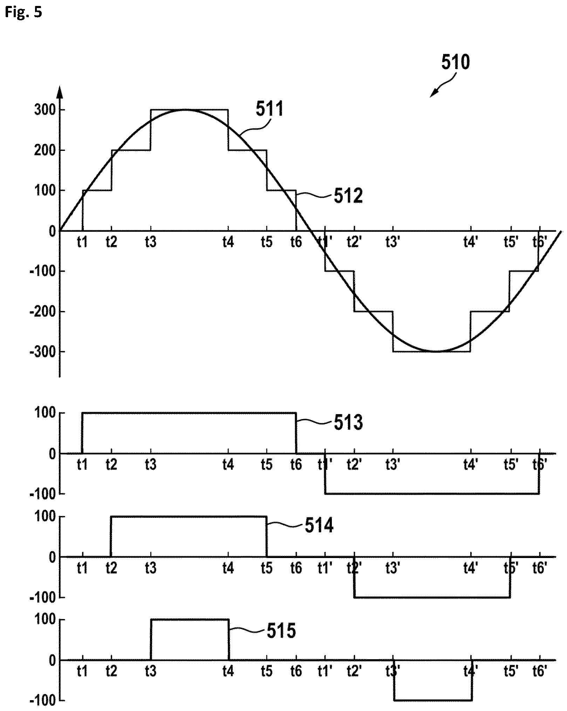

In Figure 5, a timing diagram of a standard modular multilevel converter having three modules is shown. In this example, only three modules are used for simplification, but the basic concept is extendable to any number of modules. This diagram shows four curves of different voltages over time. The time axis horizontally from left to right is normalized to a full period of a sinusoidal output signal which may correspond to a time of 20 ms in case of a 50 Hz output. The vertical axis from the center line to the top may be scaled in 100 V, therefore extending from -300 V from the most negative value to +300 V of the most positive value, which corresponds to a peak-to-peak-value of the sinusoidal output voltage curve of 600 V. Each of the modules in this example has as voltage of 100 V.

The first curve 511 shows a dashed sinusoidal output voltage with said peak-to-peak-value of 600 V and an exemplary period of 20 ms. The stepped curve 512 is the approximated multilevel converter output voltage. Here, the steps made by switching on and off individual modules are shown. The next curves give details about which modules are in which state.

The second diagram shows the state of a first module in curve 513. With the beginning of the curve, this module is switched on to provide a 100 V voltage after a short time and remains on most of the time to switch off for a short break and reverse after zero crossing of the sinusoidal output curve.

The next curve 514 shows a second module output which has a shorter on-time compared to the first module.

The last curve 515 shows the status of a third module which has the shortest on-time of all three modules.

In this figure and some of the following figures time marks t1, t2 .. t6 and t1', t2' .. t6' are indicated at the time axis. They serve to compare the switching times. For example, the first module is positive on between t1 and t6 and negative on between t1' and t6'. It is off all other times. The second module is positive on between t2 and t5 and negative on between t2' and t5'. The third module is positive on between t3 and t4 and negative on between t3' and t4'.

For simplification, in these figures, only the discrete voltage levels of the modules are shown. To adapt the output voltage closer to a desired waveform, which may be a sine wave, a PWM (Pulse Width Modulation) of the output signal may be made. Here PWM may be performed with one module or a plurality of modules.

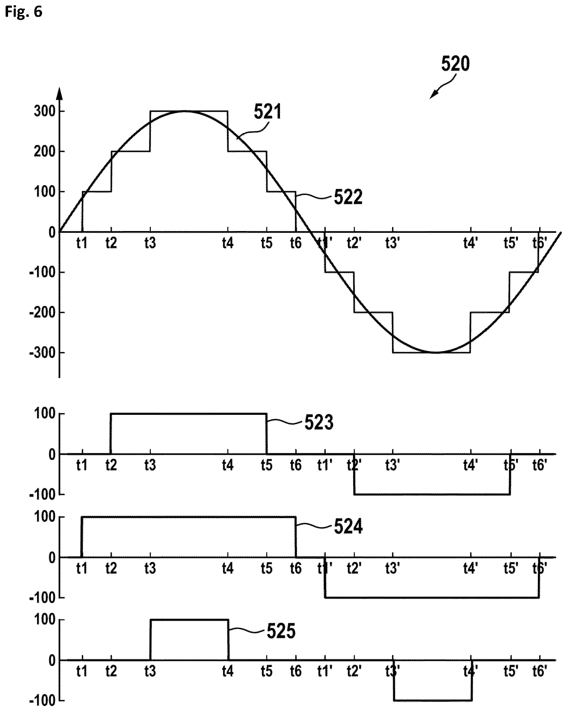

In Figure 6, voltages of a temperature balancing multilevel converter in diagram 520 is shown. This diagram is comparatively similar to the previous diagram with a sinusoidal output voltage 521, approximated multilevel converter output 522, first module output 523, second module output 524, and third module output 525. Compared to the previous Figure, the on-times of the first and the second module are exchanged against each other. In an embodiment, the sequence of curves 510 and 520 are repeated multiple times or even continuously over a certain period. This means that the first module and the second module approximately have the same RMS current which is significantly higher than the RMS current of the third module which continuously has short on-times. Therefore, the first and the second module heat up more than the third module. Such a mode of operation may be chosen, if the third module has a comparatively high temperature compared to the first and second module to equalize temperatures.

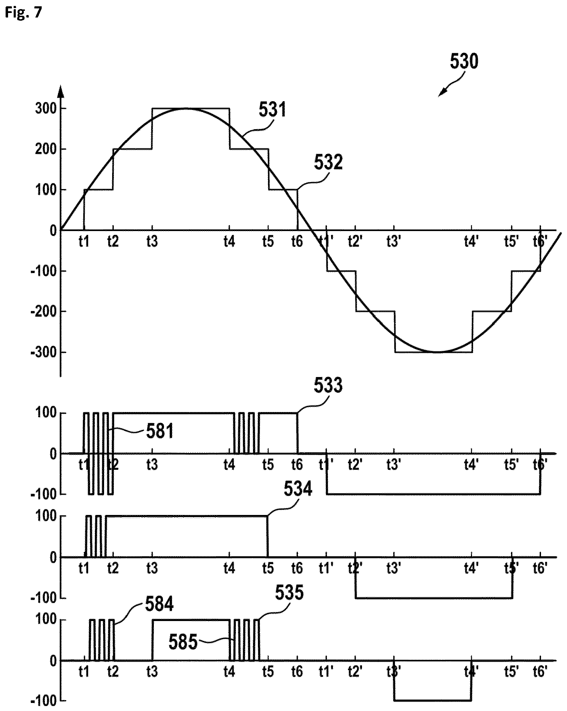

In Figure 7, voltages of a multilevel converter with frequency control are shown. The first curve again is a sinusoidal output voltage 531 and shows the sinusoidal output signal, and curve 532 the approximated multilevel converter output voltage. The first module output 533 shows two groups of pulses. A first group of pulses 581 which go from a positive voltage to a negative voltage, and a second group of pulses 582 which cycle from a positive voltage to zero. Further, second module cycles 583 are shown in curve 534, and third module cycles 584 and 585 are shown in curve 535.

When the first slope of cycles 581 of module 1 goes to 100 V, the second and third modules are still at 0 V. After a first short period, which may be 0,5 ms, the first module inverts its output voltage from 100 V to -100 V. Synchronously, at the same time the second and third output modules issue a voltage of 100 V each, such that the total output voltage is -100V +100 V + 100 V = +100 V and therefore remains the same. This is followed by some cycles where either the first module is at 100 V and second and third modules are at 0 V, or the first module is at -100 V and the second and third modules are at +100 V. This may be called opposed operation. During these cycles, the total voltage is kept constant at +100 V, whereas the direction of current flow in the first module is reversed, such that the first module battery switches from discharging to charging, and vice versa. This does not transfer any power to the output of the multilevel converter, but only moves energy internally and creates electrical losses, such heating the batteries.

A similar situation is with second cycles of first module 582 and second cycle 585 of third module. In this embodiment, whenever the output voltage of the first module is 100 V, the output voltage of third module is zero, and when the output voltage of the first module is zero, then the output voltage of the third module is 100 V, such that during the cycles as shown in this Figure, the sum of output voltages of first and third modules is constant at 100 V. This may be called interleaved operation. Here, no energy is shifted between modules because no battery is charged. But these cycles use a further effect introducing losses into a battery which is switching the battery with a certain frequency, which may be around 1 kHz in this example.

As mentioned above, losses of a battery are dependent on its operating frequency. There are certain frequencies, strongly depending on the specific type of battery where the losses are comparatively low, and other frequencies where the losses are comparatively high. In this embodiment, a frequency may be selected for introducing higher losses to heat up the first and the third battery more than the second battery. As shown in this embodiment, multiple switching strategies may be combined in a single output signal like the sinusoidal output voltage.

Both operational modes described above, opposed and interleaved operation, can be accomplished not only with one, but with a plurality of modules. In interleaved operation, the voltage output of module 1 can be 100V for the first 1ms and 0V for the following 1ms. In order to have a constant output voltage of the converter, a second module can output 100V for the following millisecond, as described above. But it can also output 100V for only the next 0,5ms and a third module can output 100V for the last 0,5ms. It can be also 3, 4 or more modules jointly taking over outputting the 100V in order to have a constant output voltage. The same is valid for opposed operation.

In an embodiment, the controller may be configured to operate a plurality of converter modules such that the total output voltage of the plurality of converter modules remains constant. A first module is switching with a first frequency and/or a first duty cycle between the first state and the second state and at least a second module is switching with the same first frequency and/or first duty cycle. Further the modules are switching either with alternating first and second states of the modules or with inverted polarity of the modules. Further, the at least one second module includes a plurality of modules, which are alternatingly activated such that their total output voltage is the same as required for the at least one second module.

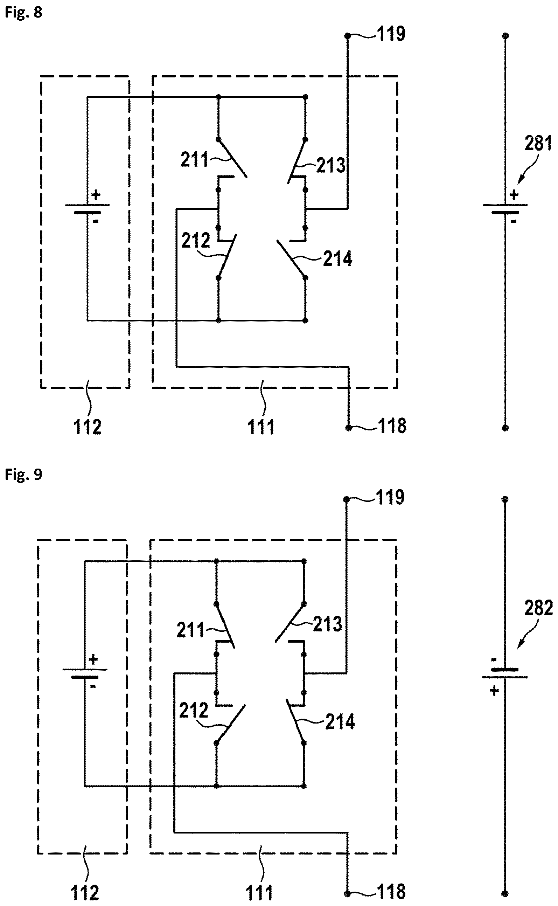

In Figure 8, a first switching state of a switching circuit 111 is shown. Specifically, in this Figure, a schematic diagram of the switching circuit 111 connected to a battery 112 is shown. The switching circuit may include a full bridge, also called an H-bridge including four switches. This full bridge is only for demonstrating the basic switching function. Instead, any other suitable switching technology as known from prior art may be used. The full bridge includes four switches 211, 212, 213, 214, whereas the first switch 211 and the third switch 213 may be connected to the positive terminal of battery 112 and the second switch 212 and the fourth switch 214 may be connected to the negative terminal of battery 112. Further, the first switch 211 and the second switch 212 are connected together to a module first port 118, and the third switch 213 together with fourth switch 214 are connected to a module second port 119. The switches may be controlled to operate individually by a module controller 115 which is not shown in this Figure, but in Figure 1. The module controller 115 may have a control line for controlling each of the switches, e.g. providing a gate signal for MOSFET switches. In this Figure, a first switching state is shown. First switch 211 and fourth switch 214 are open while second switch 212 and third switch 213 are closed, such that the battery is connected with its positive terminal to the module second port 119 and with its negative terminal to the module first port 118. On the right side next to the switch, an equivalent circuit diagram 281 with a battery connected between the module ports is shown.

In Figure 9, a second switching state is shown. This Figure basically shows the same components as the previous Figure, but with the switches 211 - 214 in different switching states. Here, first switch 211 and fourth switch 214 are closed while second switch 212 and third switch 213 are open. In this configuration the battery is connected in a reverse order, such that the positive terminal of the battery is now connected to the module first port 118, whereas the negative terminal of the battery is connected to the module second port 119. To the right is an equivalent circuit diagram 282 showing the inversely connected battery.

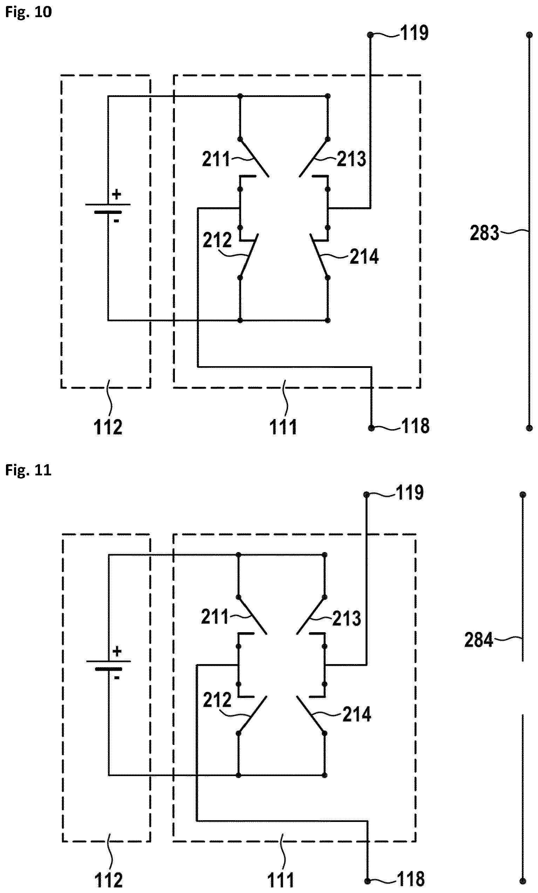

In Figure 10, a third switching state is shown. This Figure basically shows the same components as the previous two Figures, but with the switches 211 - 214 in different switching states. Here, the second switch 212 and fourth switch 214 are closed, whereas the first switch 211 and third switch 213 are open. This leads to a short circuit between the module first port 118 and the module second port 119 while the battery 112 is disconnected. This is shown in an equivalent circuit diagram 283.

In Figure 11, a fourth switching state is shown. This Figure basically shows the same components as the previous three Figures, but with all four switches in an open state. Consequently, the connection between the module first port 118 and the module second port 119 is open and the battery is disconnected. This is shown in equivalent circuit diagram 284 with an open circuit.

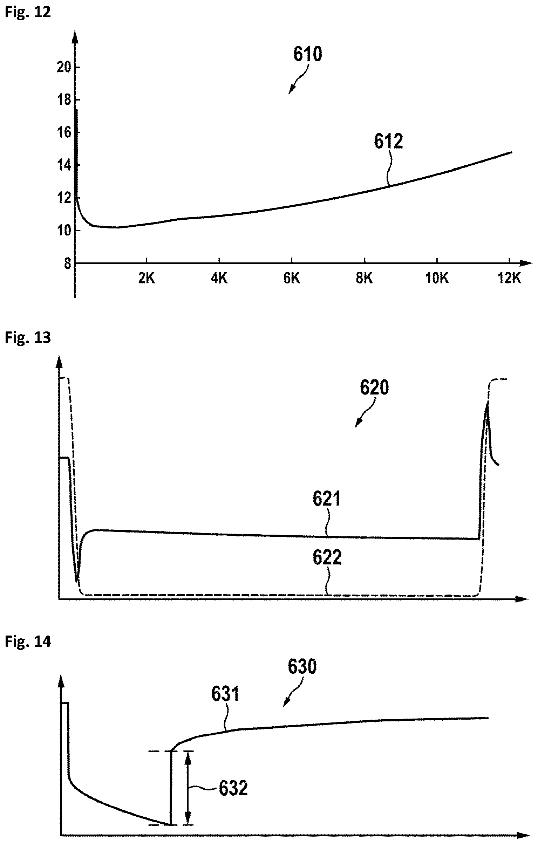

Figure 12 shows in diagram 610 the influence of frequency on the internal resistance of an exemplary battery cell. The horizontal axis from left to right shows the frequency of the current through the battery starting from 0 Hz to 12kHz. The vertical axis upwards shows the internal resistance of the battery between 8 and 20 mOhm (0.008 - 0.020 Ohm). The curve 612 shows that the internal resistance varies between 10mOhm at lower frequencies around 500 Hz and increases to 16 mOhm at higher frequencies up to 12kHz. At very low frequencies, the resistance is also higher. Therefore, operating a battery at higher frequencies may increase the internal resistance and such the losses of a battery can be increased to heat up a battery. If minimum losses and maximum efficiency of a MLC are desired, the point of lowest internal resistance - in this example at bout 500Hz may be chosen.

Figure 13 shows in diagram 620 a battery voltage 621 and battery switch resistance 622 during a battery switching cycle. The horizontal axis is a time axis which may indicate a time over its full length of 5 ms but may also be in a range between 1 ms and 100 ms or more. The vertical axis indicates a voltage of the battery scaled with an offset as well as a switch resistance between a few milliohms and many kiloohms. At the left beginning of the diagram the switch resistance 622 is high and the battery delivers an idle voltage. Then the switch is switched on, decreasing its resistance. The battery current increases and after a voltage undershoot the battery reaches its load voltage which is lower due to its internal resistance. Finally, at the right side, the switch is switched off again.

Figure 14 shows a detail of the previous figure allowing for an indirect temperature measurement. After the switching undershoot of the battery voltage, the battery voltage recovers comparatively fast, normally in a few microseconds to a battery load voltage 631. This voltage step 632 is an indication for battery temperature. It may increase with decreasing battery temperature.

### List of reference numerals

- 100: modular multilevel converter (MMC)
- 101: first converter port
- 102: second converter port
- 105: master controller
- 110, 120, 130, 140: converter module
- 111, 121, 131, 141: switching circuit
- 112, 122, 132, 142: battery
- 113, 123, 133, 143: temperature sensor
- 115, 125, 135, 145: module controller
- 117, 127, 137, 147: communication link
- 118, 128, 138, 148: module first port
- 119, 129, 139, 149: module second port
- 211, 212, 213, 214: switch
- 281: Equivalent circuit diagram of connected battery
- 282: Equivalent circuit diagram of inverse connected battery
- 283: Equivalent circuit diagram of short circuit
- 284: Equivalent circuit diagram of open circuit
- 300: cooling system
- 301: heat exchanger
- 302: cooling liquid duct
- 303: cooling liquid
- 304: direction of cooling liquid flow
- 311, 321, 331, 341: heat transfer
- 312, 322, 332, 342: battery temperature
- 313, 323, 333, 343: cooling system temperature
- 410: Method of temperature balancing
- 411: obtaining a first temperature value
- 412: calculating an electrical power dissipation setpoint
- 413: calculating a frequency and/or duty cycle of switching
- 414: providing control signals
- 420: Sequence of states
- 421: first state
- 422: second state
- 510: voltages of standard MLC
- 511, 521, 531: sinusoidal output voltage
- 512, 522, 532: approximated MLC output voltage
- 513, 523, 533: first module output
- 514, 524, 534: second module output
- 515,525,535: third module output
- 520: voltages of temperature balancing MLC
- 530: voltages of MLC with frequency control
- 581, 582: first module cycles
- 583: second module cycles
- 584, 585: third module cycles
- 610: Diagram of battery impedance vs. frequency
- 612: exemplary battery curve
- 620: diagram of battery voltage and current during a cycle
- 621: battery voltage
- 622: battery switch resistance
- 630: detail diagram of battery voltage at falling current edge
- 631: battery load voltage
- 632: voltage step

## Claims

1. A modular multilevel converter (100) including a controller (105, 115, 125, 135, 145) and a plurality of converter modules (110, 120, 130, 140) connected in series, each of the converter modules (110, 120, 130, 140) further including:
- at least one module first port (118, 128, 138, 148),
- at least one module second port (119, 129, 139, 149),
- a battery (112, 122, 132, 142),
- a switching circuit (111, 121, 131, 141) including at least one switch, the switching circuit (111, 121, 131, 141) being at least configured to alternatingly
a) in a first state connect the battery (112, 122, 132, 142) between the at least one module first port (118, 128, 138, 148) and the at least one module second port (119, 129, 139, 149), and
b) in a second state to disconnect the battery from the at least one module first port (118, 128, 138, 148) and/or the at least one module second port (119, 129, 139, 149) and further to directly connect the at least one module first port (118, 128, 138, 148) to the at least one module second port (119, 129, 139, 149),
- at least one temperature sensor (113, 123, 133, 143) configured to provide a temperature value of the battery (112, 122, 132, 142) to the controller (105, 115, 125, 135, 145),
**characterized in, that**
the controller (105, 115, 125, 135, 145) is configured to individually operate at least one of the converter modules (110, 120, 130, 140) by bringing the switching circuit (111, 121, 131, 141) for first durations in the first state and for second durations in the second state based on the temperature of its battery (112, 122, 132, 142).

2. A multilevel converter according to claim 1,
**characterized in, that**
the at least one temperature sensor (113, 123, 133, 143) includes a microcontroller configured to evaluate at least one current and/or at least one voltage of the battery to estimate the temperature of the battery.

3. A multilevel converter according to any of the previous claims,
**characterized in, that**
the at least one temperature sensor (113, 123, 133, 143) includes a thermal sensor which is thermally coupled to the battery such that the thermal resistance between the thermal sensor and the battery is lower than the thermal resistance between the thermal sensor and the switching circuit and wherein the battery may be thermally insulated from the switching circuit.

4. A multilevel converter according to claim any of the previous claims, **characterized in, that**
the controller (105, 115, 125, 135, 145) is configured to modify frequency and/or duty cycle of switching between the first state and the second state and/or
the controller is configured to
increase the RMS (Root Mean Square) current though a battery (112, 122, 132, 142) to increase the battery temperature and to decrease the RMS current though a battery (112, 122, 132, 142) to decrease the battery temperature.

5. A multilevel converter according to any of the previous claims, **characterized in, that**
the first durations of the first state and the second durations of the second state of a converter module are adapted to obtain a predetermined temperature of its battery (112, 122, 132, 142).

6. A multilevel converter according to any of the previous claims,
**characterized in, that**
the first durations in the first state and the second durations in the second state of a first converter module (110, 120, 130, 140) with its first battery (112, 122, 132, 142) having a lower temperature value than the temperature value of a second battery (112, 122, 132, 142) of a second converter module (110, 120, 130, 140) is adapted to increase the thermal dissipation of the first battery (112, 122, 132, 142).

7. A multilevel converter according to claim 1,
**characterized in, that**
the controller is configured to perform the steps of
- obtaining a temperature value of each of a plurality of batteries (112, 122, 132, 142) of a plurality of converter modules (110, 120, 130, 140),
- calculating an electrical power dissipation setpoint for each of the plurality of the batteries (112, 122, 132, 142) based on a difference between the temperature value and predetermined temperature values,
- calculating a frequency and/or duty cycle of switching between the state and the second state to obtain the calculated power dissipation,
- providing control signals to each of said plurality of converter modules (110, 120, 130, 140) to obtain a predetermined output voltage waveform of the multilevel converter while operating each of the plurality of converter modules (110, 120, 130, 140) with the calculated frequency and/or duty cycle.

8. A multilevel converter according to the preceding claim,
**characterized in, that**
the predetermined temperature values are the same for each of the plurality of the batteries (112, 122, 132, 142).

9. A multilevel converter according to claim 1 or 2,
**characterized in, that**
the controller (105, 115, 125, 135, 145) is configured to operate at least one of the modules with a frequency and/or duty cycle of switching between the first state and the second state, where the power dissipation is at a minimum.

10. A multilevel converter according to any of the previous claims,
**characterized in, that**
the controller (105, 115, 125, 135, 145) is configured to operate a plurality of converter modules (110, 120, 130, 140) such that the total output voltage of the plurality of converter modules remains constant wherein a first module (110, 120, 130, 140) is switching with a first frequency and/or a first duty cycle between the first state and the second state and at least a second module (110, 120, 130, 140) is switching with the same first frequency and/or first duty cycle and the modules are switching
- either with alternating first and second states of the modules
- or with inverted polarity of the modules.

11. A multilevel converter according to the preceding claim,
**characterized in, that**
the at least one second module includes a plurality of modules, which are alternatingly activated such that their total output voltage is the same as required for the at least one second module.

12. A multilevel converter according to any of the previous claims,
**characterized in, that**
the controller (105, 115, 125, 135, 145) is configured for controlling the switching circuit (111, 121, 131, 141) of at least one of the converter modules (110, 120, 130, 140) for first durations in the first state and for second durations in the second state
wherein in a first operational mode first durations and/or second durations are based on the temperature of its battery (112, 122, 132, 142) and
in a second operational mode first durations and/or second durations are based on the state of charge of a plurality of batteries.

13. A multilevel converter according to any of the previous claims,
**characterized in, that**
the at least one temperature sensor (113, 123, 133, 143) is configured to determine the temperature of a battery based on measurements of the battery voltage shortly after a load transition.

14. A multilevel converter according to any of the previous claims,
**characterized in, that**
the switching circuit (111, 121, 131, 141) being configured to alternatingly connect the battery (112, 122, 132, 142) between the at least one module first port (118, 128, 138, 148) and the at least one module second port (119, 129, 139, 149) in either polarity.

15. A method of temperature-balancing batteries in a modular multilevel converter, the method including the steps of
- obtaining a first temperature value of each of a plurality of batteries (112, 122, 132, 142) of a first plurality of converter modules (110, 120, 130, 140),
- calculating an electrical power dissipation setpoint for each of the first plurality of the batteries (112, 122, 132, 142) based on a difference between the first temperature value and predetermined temperature values,
- calculating a frequency and/or duty cycle of switching between the first state and the second state to obtain the calculated power dissipation,
- providing control signals to each of said first plurality of converter modules (110, 120, 130, 140) to obtain a predetermined output voltage waveform of the multilevel converter while operating each of the first plurality of converter modules (110, 120, 130, 140) with the calculated frequency and/or duty cycle.
